# EUROPÄISCHE PATENTSCHRIFT

(11) **EP 0 647 657 B1**
(45) Veröffentlichungstag und Bekanntmachung des Hinweises auf die Patenterteilung: **06.11.1996**
(21) Anmeldenummer: 94115053.4
(22) Anmeldetag: 23.09.1994
(51) Int. Cl.: C08F 4/52, C08F 2/34, C08F 36/04

(54) **Katalysator, dessen Herstellung und Verwendung zur Gasphasenpolymerisation von konjugierten Dienen**
Catalyst, its manufacture and its use in the gas-phase polymerisation of conjugated dienes
Catalyseur, sa préparation et son application à la polymérisation en phase gazeuse de diènes conjugués

(30) Priorität: 06.10.1993 DE 4334045
(43) Veröffentlichungstag der Anmeldung: 12.04.1995
(73) Patentinhaber: BAYER AG, 51368 Leverkusen (DE)
(72) Erfinder: Sylvester, Gerd, Dr., D-51375 Leverkusen (DE); Vernaleken, Hugo, Dr., D-47800 Krefeld (DE)

(56) Entgegenhaltungen:
- EP-A- 0 076 535
- EP-A- 0 201 962
- EP-A- 0 375 421
- EP-B- 0 007 027
- EP-B- 0 011 184
- US-A- 3 641 188
- US-A- 4 429 089
- US-A- 4 461 883
- US-A- 4 556 647
- US-A- 4 575 538
- US-A- 5 064 910

## Beschreibung

Die Erfindung betrifft einen Katalysator, dessen Herstellung sowie seine Verwendung zur Polymerisation von konjugierten Dienen, insbesondere Butadien, in der Gasphase.

Polybutadien mit einem hoben Anteil an cis-1,4-Einheiten wird seit längerer Zeit in großtechnischem Maßstab produziert und für die Herstellung von Reifen und anderen Gummiwaren verwendet. Die Polymerisation wird dabei in flüssiger Phase unter Verwendung der verschiedensten Katalysatorsysteme durchgeführt. Ein besonders vorteilhaftes Katalysatorsystem zur Herstellung von Polybutadien mit einem hohen Anteil an cis-1,4-Einheiten wird in der Europäischen Patentschrift 11184 beschrieben. Das dort beschriebene und zur Polymerisation von Butadien in Lösung verwendete Katalysatorsystem besteht aus einem Carboxylat der Seltenen Erden, einem Aluminiumtrialkyl und/oder Alkylaluminiumhydrid und einer weiteren Lewis-Säure.

Die Polymerisation von konjugierten Dienen in Lösung hat den Nachteil, daß bei der Abtrennung des nicht umgesetzten Monomeren und des Lösungsmittels vom gebildeten Polymeren niedermolekularer Verbindungen über Abluft und Abwasser in die Umwelt gelangen können und deshalb entsprechend entsorgt werden müssen.

Es ist auch bekannt, die Polymerisation von konjugierten Dienen ohne Zusatz von Lösungsmitteln in den flüssigen Monomeren durchzuführen. Ein solches Verfahren hat jedoch den Nachteil, daß bei der vollständigen Polymerisation eine große Wärmemenge frei wird, die schwer zu regulieren ist und deshalb ein gewisses Gefahrenpotential darstellt. Außerdem treten auch hier bei der Abtrennung der Polymeren von den Monomeren Belastungen für die Umwelt auf.

In den letzten Jahren hat sich zur Herstellung insbesondere von Polyethylen und Polypropylen das Gasphasenverfahren als besonders vorteilhaft erwiesen und technisch durchgesetzt. Die umweltrelevanten Vorteile des Gasphasenverfahrens beruhen insbesondere darauf, daß keine Lösungsmittel eingesetzt werden und Emissionen und Abwasserbelastungen verringert werden können.

Bisher ist kein Verfahren bekannt, die Polymerisation von konjugierten Dienen, insbesondere von Polybutadien, direkt aus der Gasphase durchzuführen. Ein Grund mag darin liegen, daß die für die Lösungspolymerisation von konjugierten Dienen verwendeten Ziegler-Natta-Katalysatoren auf Basis von Titan, Kobalt, Nickel oder Neodym nicht ohne weiteres für die Polymerisation in der Gasphase geeignet sind, insbesondere aufgrund der geringen Produktivität, d.h. der geringen Menge an Polymer, die sich mit einer bestimmten Menge Katalysator herstellen läßt. So ist der in EP 11184 beschriebene Katalysator aufgrund seiner, bei einer Gasphasenpolymerisation nach kurzer Zeit stark abfallenden Aktivität praktisch nicht geeignet, konjugierte Diene, insbesondere Butadien, in der Gasphase zu Polybutadien mit einem hohen Anteil an cis-1,4-Einheiten zu polymerisieren (siehe Vergleichsversuch).

Es wurde nun überraschend gefunden, daß man die Polymerisation von konjugierten Dienen, insbesondere Butadien, auch ohne Zusatz von Lösungsmitteln in der Gasphase durchführen kann, wenn man die an sich bekannten Katalysatoren auf der Basis von Verbindungen der Seltenen Erden mit einem teilchenförmigen, inerten, anorganischen Feststoff mit einer spezifischen Oberfläche größer als 10 m²/g (BET) und einem Porenvolumen von 30 bis 1 500 ml/g versetzt.

Gegenstand der Erfindung ist somit ein Katalysator bestehend aus:
A) einem Alkoholat der Seltenen Erden (I),
   einem Carboxylat der Seltenen Erden (II),
   einer Komplexverbindung der Seltenen Erden mit Diketonen (III) und/oder
   einer Additionsverbindung der Halogenide der Seltenen Erden mit einer Sauerstoff- oder Stickstoff-Donatorverbindung (IV) folgender Formeln:

   (RO)₃M (I),

   (R-CO₂)₃M (II),

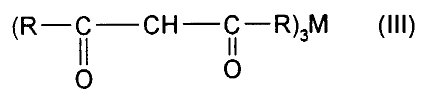

   und

   MX₃·y Donator (IV),
B) einem Aluminiumtrialkyl, einem Dialkylaluminiumhydrid und/oder einem Alumoxan der Formeln (V) - (VIII):

   Al R₃ (V),

   HAl R₂ (VI),

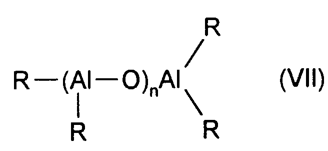

   und 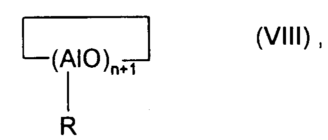 wobei in den Formeln
   - M: ein dreiwertiges Element der Seltenen Erden mit den Ordnungszahlen 57 bis 71 bedeutet,
   - R: gleich oder verschieden ist und Alkylreste mit 1 bis 10 Kohlenstoffatomen bedeutet,
   - X: für Chlor, Brom oder Iod steht
   - y: 1 bis 6 bedeutet und
   - n: 1 bis 50 bedeutet,
C) einer weiteren Lewissäure und
D) einem inerten, teilchenförmigen, anorganischen Feststoff mit einer spezifischen Oberfläche größer als 10 m²/g (BET) und einem Porenvolumen von 30 bis 1 500 ml/g.

In der Komponente A bedeutet M ein dreiwertiges Element der Seltenen Erden mit den im Periodensystem gekennzeichneten Ordnungszahlen 57 bis 71. Bevorzugt werden solche Verbindungen, in denen M Lanthan, Cer, Praseodym oder Neodym oder ein Gemisch von Elementen der Seltenen Erden, welches mindestens eines der Elemente Lanthan, Cer, Praseodym oder Neodym zu wenigstens 10 Gew.-% enthält, bedeutet. Ganz besonders bevorzugt sind Verbindungen, in denen M Lanthan oder Neodym bzw. ein Gemisch von Seltenen Erden, welches Lanthan oder Neodym zu mindestens 30 Gew.-% enthält, bedeutet.

Als Reste R in den Formeln (I) - (IV) sind insbesondere geradkettige oder verzweigte Alkylreste mit 1 - 20 Kohlenstoffatomen, bevorzugt 1 - 15 Kohlenstoffatomen, zu nennen, wie Methyl, Ethyl, n-Propyl, n-Butyl, n-Pentyl, Isopropyl, Isobutyl, tert.-Butyl, 2 Ethylhexyl, neo-Pentyl, neo-Octyl, neo-Decyl, neo-Dodecyl.

Als Alkoholate der Komponente A werden z.B. genannt: Neodym(III)-n-propanolat, Neodym(III)-n-butanolat, Neodym(III)-n-decanolat, Neodym(III)-iso-propanolat, Neodym(III)-2-ethyl-hexanolat, Praseodym(III)-n-propanolat, Praseodym(III)-n-butanolat, Praseodym(III)-n-decanolat, Praseodym(III)-iso-propanolat, Praseodym(III)-2-ethyl-hexanolat, Lanthan(III)-n-propanolat, Lanthan(III)-n-butanolat, Lanthan(III)-n-decanolat, Lanthan(III)-iso-propanolat, Lanthan(III)-2-ethyl-hexanolat, bevorzugt Neodym(III)-n-butanolat, Neodym(III)-n-decanolat, Neodym(III)-2-ethyl-hexanolat.

Als Carboxylate der Komponente A sind geeignet: Lanthan(III)-propionat, Lanthan-(III)-diethylacetat, Lanthan(III)-2-ethylhexanoat, Lanthan(III)-stearat, Lanthan(III)-benzoat, Lanthan(III)-cyclohexancarboxylat, Lanthan(III)-oleat, Lanthan(III)-versatat, Lanthan(III)-naphthenat, Praseodym(III)-propionat, Praseodym(III)-diethylacetat, Praseodym(III)-2-ethylhexanoat, Praseodym(III)-stearat, Praseodym(III)-benzoat, Praseodym(III)-cyclohexancarboxylat, Praseodym(III)-oleat, Praseodym(III)-versatat, Praseodym(III)-naphthenat, Neodym(III)-propionat, Neodym(III)-diethylacetat, Neodym(III)-2-ethylhexanoat, Neodym(III)-stearat, Neodym(III)-benzoat, Neodym(III)-cyclohexancarboxylat, Neodym(III)-oleat, Neodym(III)-versatat, Neodym(III)-naphthenat, bevorzugt Neodym(III)-2-ethylhexanoat, Neodym(III)-versatat, Neodym(III)-naphthenat. Besonders bevorzugt wird Neodymversatat.

Als Komplexverbindungen der Komponente A seien genannt: Lanthan(III)-acetylacetonat, Praseodym(III)-acetylacetonat, Neodym(III)-acetylacetonat, bevorzugt Neodym(III)-acetylacetonat.

Als Additionsverbindungen der Komponente A mit Donatoren werden beispielsweise genannt: Lanthan(III)-chlorid mit Tributylphosphat, Lanthan(III)-chlorid mit Tetrahydrofuran, Lanthan(III)-chlorid mit iso-Propanol, Lanthan(III)-chlorid mit Pyridin, Lanthan(III)-chlorid mit 2-Ethylhexanol, Lanthan(III)-chlorid mit Ethanol, Praseodym(III)-chlorid mit Tributylphosphat, Praseodym(III)-chlorid mit Tetrahydrofuran, Praseodym(III)-chlorid mit iso-Propanol, Praseodym(III)-chlorid mit Pyridin, Praseodym(III)-chlorid mit 2-Ethylhexanol, Praseodym(III)-chlorid mit Ethanol, Neodym(III)-chlorid mit Tributylphosphat, Neodym(III)-chlorid mit Tetrahydrofuran, Neodym(III)-chlorid mit iso-Propanol, Neodym(III)-chlorid mit Pyridin, Neodym-(III)-chlorid mit 2-Ethylhexanol, Neodym(III)-chlorid mit Ethanol, Lanthan(III)-bromid mit Tributylphosphat, Lanthan(III)-bromid mit Tetrahydrofuran, Lanthan(III)-bromid mit iso-Propanol, Lanthan(III)-bromid mit Pyridin, Lanthan(III)-bromid mit 2-Ethylhexanol, Lanthan(III)-bromid mit Ethanol, Praseodym(III)-bromid mit Tributylphosphat, Praseodym(III)-bromid mit Tetrahydrofuran, Praseodym(III)-bromid mit iso-Propanol, Praseodym(III)-bromid mit Pyridin, Praseodym(III)-bromid mit 2-Ethylhexanol, Praseodym(III)-bromid mit Ethanol, Neodym(III)-bromid mit Tributylphosphat, Neodym(III)-bromid mit Tetrahydrofuran, Neodym(III)-bromid mit iso-Propanol, Neodym(III)-bromid mit Pyridin, Neodym(III)-bromid mit 2-Ethylhexanol, Neodym(III)-bromid mit Ethanol, bevorzugt Lanthan(III)-chlorid mit Tributylphosphat, Lanthan(III)-chlorid mit Pyridin, Lanthan(III)-chlorid mit 2-Ethylhexanol, Praseodym(III)-chlorid mit Tributylphosphat, Praseodym(III)-chlorid mit 2-Ethylhexanol, Neodym(III)-chlorid mit Tributylphosphat, Neodym(III)-chlorid mit Tetrahydrofuran, Neodym(III)-chlorid mit 2-Ethylhexanol, Neodym(III)-chlorid mit Pyridin, Neodym(III)-chlorid mit 2-Ethylhexanol, Neodym(III)-chlorid mit Ethanol.

Die Verbindungen der Seltenen Erden können einzeln oder im Gemisch untereinander eingesetzt werden.

Ganz besonders bevorzugt werden Neodymversatat, Neodymoctanoat und/oder Neodymnaphthenat als Komponente A eingesetzt.

In den Formeln (V) bis (VIII) der Komponente B bedeutet R einen geradkettigen oder verzweigten Alkylrest mit 1 bis 10 C-Atomen, bevorzugt 1 bis 4 C-Atomen. Beispiele für geeignete Aluminiumalkyle der Formeln (V) und (VI) sind:

Trimethylaluminium, Triethylaluminium, Tri-n-propylaluminium, Triisopropylaluminium, Tri-n-butylaluminium, Triisobutylaluminium, Tripentylaluminium, Trihexylaluminium, Tricyclohexylaluminium, Trioctylaluminium, Diethylaluminiumhydrid, Di-n-butylaluminiumhydrid und Di-iso-butylaluminiumhydrid. Bevorzugt werden Triethylaluminium, Triisobutylaluminium und Di-iso-butylaluminiumhydrid. Besonders bevorzugt wird Diiso-butylaluminiumhydrid.

Als Beispiele für Alumoxane (VII) und (VIII) werden genannt: Methylalumoxan, Ethylalumoxan und iso-Butylalumoxan, bevorzugt Methylalumoxan und iso-Butyl-alumoxan.

Als Komponente C werden sogenannte Lewis-Säuren eingesetzt. Beispielhaft seien die Organometallhalogenide erwähnt, in denen das Metallatom der Gruppe 3a) oder 4a) angehört, sowie Halogenide der Elemente der Gruppe 3a), 4a) und 5a) des Periodensystems, wie es im "Handbook of Chemistry and Physics", 45th Edition 1964-65 dargestellt ist. Genannt werden insbesondere:

Methylaluminiumdibromid, Methylaluminiumdichlorid, Ethylaluminiumdibromid, Ethylaluminiumdichlorid, Butylaluminiumdibromid, Butylaluminiumdichlorid, Dimethylaluminiumbromid, Dimethylaluminiumchlorid, Diethylaluminiumbromid, Diethylaluminiumchlorid, Dibutylaluminiumbromid, Dibutylaluminiumchlorid, Methylaluminiumsesquibromid, Methylaluminiumsesquichlorid, Ethylaluminiumsesquibromid, Ethylaluminiumsesquichlorid, Aluminiumtribromid, Antimontrichlorid, Antimonpentachlorid, Phoxphortrichlorid, Phosphorpentachlorid, Zinntetrachlorid.

Bevorzugt werden Diethylaluminiumchlorid, Ethylaluminiumsesquichlorid, Ethylaluminiumdichlorid, Diethylaluminiumbromid, Ethylaluminiumsesquibromid und/oder Ethylaluminiumdibromid eingesetzt.

Als Komponente C können auch die Reaktionsprodukte aus Aluminiumverbindungen, wie sie als Komponente B beschrieben werden, mit Halogenen oder Halogenverbindungen, z.B. Triethylaluminium mit Brom oder Triethylaluminium mit Butylchlorid, eingesetzt werden. In diesem Fall kann die Umsetzung getrennt durchgeführt werden, oder die für die Umsetzung benötigte Menge der Alkyaluminiumverbindung wird zu der als Komponente B benötigten Menge addiert.

Bevorzugt werden Ethylaluminiumsesquichlorid, Butylchlorid und Butylbromid.

Als Komponente D werden inerte, teilchenförmige, anorganische Feststoffe mit einer spezifischen Oberfläche größer als 10, bevorzugt 10 bis 1 000 m²/g (BET) und einem Porenvolumen von 0,3 bis 15, bevorzugt von 0,5 bis 12 ml/g eingesetzt.

Die spezifische Oberfläche (BET) wird in üblicher Weise bestimmt nach S. Brunauer, P.H. Emmet und Teller J Anorg. Chem. Soc. 60 (2), 309 (1938), das Porenvolumen wird bestimmt durch die Zentrifugationsmethode nach M. McDaniel, J. Colloid Interface Sci. 78, 31 (1980).

Als inerte, anorganische Feststoffe eignen sich insbesondere Silicagele, Tone, Alumosilikate, Talkum, Zeolithe, Ruß, anorganische Oxyde, wie Siliciumdioxyd, Aluminiumoxyd, Magnesiumoxyd, Titandioxyd, Siliciumcarbid, bevorzugt Silicagele, Zeolithe und Ruß, besonders bevorzugt Silicagel. Unter inert wird in diesem Fall verstanden, daß die Feststoffe weder eine reaktive Oberfläche aufweisen noch adsorbiertes Material enthalten, die die Bildung eines aktiven Katalysators hindern bzw. mit den Monomernen reagieren.

Die genannten inerten, anorganischen Feststoffe, die der obengenannten Spezifikation genügen und deshalb für den Einsatz geeignet sind, werden beispielsweise näher beschrieben in Ullmanns, Enzyclopädie der technischen Chemie, Band 21, S. 439 ff. (Silicagele), Band 23, S. 311 ff. (Tone), Band 14, S. 633 ff. (Ruße), Band 24, S. 575 ff. und Band 17, S. 9 ff. (Zeolithe).

Die anorganischen Feststoffe können einzeln oder im Gemisch untereinander eingesetzt werden.

Das Molverhältnis, in denen die Katalysatorkomponenten A bis D eingesetzt werden, kann in weiten Grenzen variiert werden.

Das Molverhältnis der Komponente A zu Komponente B beträgt 1:1 bis 1:000, bevorzugt 1:3 bis 1:200, besonders bevorzugt 1:3 bis 1:100. Das Molverhältnis der Komponente A zu Komponente C beträgt 1:0,4 bis 1:15, bevorzugt 1:0,5 bis 1:8.

Auf 100 g der Komponente D werden 0,1 mMol bis 1 Mol der Komponente A, bevorzugt 1 bis 50 mMol der Komponente A eingesetzt.

Es ist auch möglich, den Katalysatorkomponenten A bis D noch eine weitere Komponente E zuzusetzen. Diese Komponente E ist ein konjugiertes Dien, das das gleiche Dien sein kann, das später mit dem Katalysator polymerisiert werden soll. Bevorzugt werden verwendet Butadien und Isopren.

Wird die Komponente E dem Katalysator zugesetzt, so beträgt die Menge an E bevorzugt 1-1 000 mol, bezogen auf 1 mol der Komponente A, besonders bevorzugt 1-100 mol, bezogen auf 1 mol der Komponente A. Ganz besonders bevorzugt werden 1-50 mol, bezogen auf 1 mol der Komponente A, an E eingesetzt.

Ein weiterer Gegenstand der Erfindung ist die Herstellung des zuvor beschriebenen Katalysators. Dieser wird hergestellt, indem man die Komponenten A bis E in einem inerten Lösungs- und/oder Verdünnungsmittel mischt und das Lösungs- bzw. Verdünnungsmittel nach der gewünschten Zeit destillativ, gegebenenfalls im Vakuum, abtrennt. Als inerte Lösungs- und/oder Verdünnungsmittel können aliphatische, cycloaliphatische und/oder aromatische Lösungsmittel, wie Pentan, Hexan, Heptan, Cyclohexan, Benzol und/oder Toluol eingesetzt werden. Die Reihenfolge, in der die Komponenten A bis E und das inerte Lösungsmittel zum Reaktionsansatz gegeben werden, ist beliebig, wenn sie auch einen Einfluß auf die Eigenschaften des resultierenden Katalysators ausüben. Man kann z.B. die Komponente D in dem inerten Lösungsmittel aufschlämmen, anschließend die Komponente B dazugeben, dann danach E und schließlich C zugeben. Es ist auch möglich, zwischen den einzelnen Komponenten das inerte Lösungs- bzw. Verdünnungsmittel abzudestillieren, bevor weitere Komponenten, gegebenenfalls in einem Lösungsmittel, zugegeben werden. Die einzelnen Komponenten können auch aufgeteilt werden und die Teile zu verschiedenen Zeiten zum Katalysatoransatz gegeben werden. Eine bevorzugte Ausführungsform besteht beispielsweise darin, die Komponente D vor der Zugabe zum Katalysatoransatz mit einer Teilmenge der Komponente B in einem inerten Lösungs- oder Verdünnungsmittel zu behandeln, dieses Lösungs- und/oder Verdünnungsmittel abzudestillieren und den so erhaltenen Feststoff zu einer Mischung der Komponenten A, C, E und der Restmenge der Komponente B zuzugeben. Weitere mögliche Reihenfolgen sind (V = Verdünnungs- bzw. Lösungsmittel): 1. V, 2. A, 3. B, 4. C, 5. (D + B); 1. (B + D), 2. V, 3. C, 4. B, 5. E, 6. A oder 1. (B + D), 2. V, 3. E, 4. B, 5. C, 6. A.

Die Menge des eingesetzten inerten Lösungs- und/oder Verdünnungsmittels kann in weiten Grenzen variiert werden. Aus ökonomischen Gründen wird man die Menge möglichst gering halten. Die minimale Menge richtet sich nach der Menge und der Löslichkeit der einzelnen Komponenten sowie dem Porenvolumen der Komponente D. Bevorzugt wird eine Menge von 10 bis 2 000 Teilen des Lösungs- und/oder Verdünnungsmittels, bezogen auf 100 Teile der Komponente D, eingesetzt.

Die Herstellung des Katalysators kann in einem weiten Temperaturbereich erfolgen. Im allgemeinen liegt die Temperatur zwischen Schmelz- und Siedepunkt der Komponenten A bis C bzw. des inerten Verdünnungs- und/oder Lösungsmittels. Üblicherweise wird bei Temperaturen von -20 bis 80°C gearbeitet.

Die Erfindung betrifft auch ein Verfahren zur Polymerisation von gasförmigen konjugierten Dienen, z.B. von 1.3-Butadien, Isopren, Pentadien oder Dimethylbutadien.

Die Polymerisation erfolgt, indem man das gasförmige konjugierte Dien mit dem beschriebenen Katalysator in Berührung bringt. Dem gasförmigen Monomeren können weitere Gase zugemischt werden, die entweder der Verdünnung bzw. der Wärmeabführung oder der Regelung des Molekulargewichtes dienen. Die Polymerisation kann bei Drücken von 1 mbar bis 50 bar, bevorzugt 1 bis 20 bar, durchgeführt werden.

Im allgemeinen wird die Polymerisation bei Temperaturen von -20 bis 250°C, bevorzugt bei 0 bis 200°C, besonders bevorzugt bei 20 bis 160°C, durchgeführt.

Die Polymerisation kann in jeder für eine Gasphasenpolymerisation geeigneten Apparatur bewerkstelligt werden. So kann z.B. ein Rührreaktor, ein Drehreaktor oder ein Fließbettreaktor oder eine Kombination dieser Reaktortypen verwendet werden. Um ein Verkleben zu vermeiden, kann der Zusatz von bekannten Pudermitteln hilfreich sein. Als Pudermittel können alle inerten, feinkörnigen Feststoffe verwendet werden, insbesondere auch die als Komponente D beschriebenen inerten, anorganischen Feststoffe.

Die erhaltenen Polymerisate weisen einen Gehalt an cis-1,4-Doppelbindungen von etwa 60 bis 99 % auf. Das Molgewicht kann durch die Zusammensetzung des Katalysators und durch die Variation der Polymerisationsbedingungen verändert werden. Üblich sind Molgewichte von 10³ bis 10⁶, gemessen mit GPC (Gel-Permeations-Chromatographie).

Die Mooneyviskosität, ML (1 + 4', 100°C), liegt üblicherweise im Bereich zwischen 30 und 180 ME. Durch die Polymerisation in der Gasphase können auch sehr hochmolekulare Polymere hergestellt werden, die durch Lösungspolymerisation wegen der hohen Viskosität und der Möglichkeit von Übertragungsreaktionen durch das verwendete Lösungsmittel nur unter extrem hohem Aufwand zugänglich sind.

Die erhaltenen Polymerisate können auf übliche Weise kompoundiert und vulkanisiert werden.

In einer gängigen Ausführungsform wird bei der Polymerisation von 1.3-Butadien wie folgt verfahren:

Der aus den Komponenten A bis D und gegebenenfalls E bestehende Katalysator wird in eine Apparatur überführt, die geeignet ist, den pulverförmigen Katalysator in Bewegung zu halten. Das kann z.B. durch Rühren, Drehen und/oder einen Gasstrom erfolgen. Das zunächst im Gasraum befindliche inerte Gas, z.B. Stickstoff, wird durch das gasförmige Monomere ersetzt. Dabei setzt eine sofortige Polymerisation ein und die Temperatur steigt an. Das Monomere wird, gegebenenfalls verdünnt, mit einem Inertgas so schnell dem Reaktor zugeführt, daß die gewünschte Reaktionstemperatur nicht überschritten wird. Die Reaktionstemperatur kann auch auf übliche Weise durch Heizen bzw. Kühlen eingestellt werden. Die Polymerisation wird durch Abstellen der Monomerzufuhr beendet. Das Polymere kann in der bekannten Weise weiterbehandelt werden, indem man den Katalysator deaktiviert und das Polymere mit bekannten Alterungsschutzmitteln behandelt.

Die nachfolgenden Beispiele sollen die vorliegend beschriebene Erfindung verdeutlichen, ohne diese jedoch auf diese Beispiele einzuschränken.

### Beispiele

### Beispiel 1

### a) Vorbehandlung des Trägers:

Als Träger wurde Vulkasil S verwendet. Vulkasil ist ein Silicagel der Bayer AG mit einer Oberfläche nach BET von 230 m²/g. Das Porenvolumen beträgt 2,95 ml/g. Vor dem Einsatz war das Vulkasil S 2 Stunden bei 250°C getrocknet und 100 g Vulkasil S mit einer Lösung von 58 mMol Diisobutylaluminiumhydrid (DIBAH) in 500 ml Hexan 20 Minuten gerührt worden. Danach wurde die überstehende Lösung abdekantiert und der Rückstand im Vakuum getrocknet. Anschließend wurde erneut mit 500 ml Hexan 20 Minuten gerührt, abdekantiert und getrocknet.

### b) Herstellung des Katalysators:

Ein Katalysator wurde hergestellt, indem in einem 1 l-Kolben, ausgerüstet mit einer N₂-Zuführung und einem Magnetrührer, 120 ml trockenes n-Hexan, 150 mMol DIBAH und 5,0 mMol Ethylaluminiumsesquichlorid (EASC) vermischt wurden. Nachdem 1,25 g Butadien in die Lösung eingeleitet worden waren, wurden 5,0 mMol Neodymversatat (NDV) zugegeben. Das resultierende Gemisch wurde zu einer Aufschlämmung von 100 g des unter a) beschriebenen Trägers in 200 ml n-Hexan gegeben. Nach 5 Minuten wurde der Ansatz im Vakuum zur Trockne eingedampft. Es wurden 106 g eines frei fließenden Pulver isoliert.

### c) Polymerisation:

Die Polymerisation wurde in einem Rotationsverdampfer, der mit einem Magnetrührstab, einem Quecksilber-Überdruckventil und Anschlüssen zu einer Vakuumpumpe und zur Versorgung mit gasförmigem Stickstoff und Butadien sowie einem bis fast auf den Boden des 1 l-Kolbens reichenden Thermofühler ausgerüstet war, durchgeführt. Die Neigung des Rotationsverdampfers wurde so eingestellt, daß die Drehachse mit der des Stabmagneten einen Winkel von 45° bildete. Das gesamte Volumen der Apparatur betrug 2 Liter. In den Kolben wurden 9,8 g des Katalysators unter Stickstoff eingefüllt. Die Apparatur wurde auf 1 mbar evakuiert und unter Rühren und Drehen mit gasförmigem, trockenen Butadien gefüllt. Die Temperatur stieg innerhalb einer Minute auf 44°C. Zugleich bildete sich ein Unterdruck aus. Nach 9 Minuten war der Butadiendruck von 1 000 auf 413 mbar abgefallen. Die Temperatur betrug 39°C. Es wurde erneut Butadien bis zu einem Druck von 1 000 mbar zugegeben. Die Temperatur stieg innerhalb von 2 Minuten auf 52°C an und fiel dann langsam wieder ab. Nach weiteren 7 Minuten betrug die Temperatur 45°C bei einem Butadiendruck von 440 mbar. Im weiteren Verlauf des Versuches wurde Butadien in solchen Abständen zugegeben, daß die Temperatur zwischen 30 und 90°C gehalten wurde.

Nach 45 Minuten waren 20 g Butadien verbraucht und das Produkt wurde grobkörniger. Nach einer Stunde waren 25 g Butadien verbraucht.

Nach 4,5 Stunden wurden die Rührung und Drehung abgestellt, da eine Vermischung des Produktes nicht mehr möglich war.

Nach 6,5 Stunden wurde die Apparatur evakuiert und anschließend mit N₂ aufgefüllt. Zu diesem Zeitpunkt waren 123 g Butadien verbraucht.

22 Stunden nach dem Beginn des Versuches wurde die Apparatur erneut evakuiert, mit Butadien gefüllt und der Versuch fortgesetzt, so daß die Temperatur zwischen 40 und 60°C gehalten wurde. Nach weiteren 3 Stunden wurde das entstandene Produkt aus dem Kolben genommen. Das Gewicht betrug 189,5 g. Das Produkt wurde auf der Walze mit 2 g Stearinsäure und 2 g Vulkanox BKF der Bayer AG abgestoppt und stabilisiert.

Mooneyviskosität des Polymeren: ML (1 + 4'; 100°C) betrug 147 ME.
Gehalt an cis-1,4-Doppelbindungen: 96,5 %

### Vergleichsbeispiel 1

Der Katalysator wurde in gleicher Weise wie in Beispiel 1 beschrieben hergestellt, mit dem Unterschied, daß nach der Zugabe von NDV ohne Verwendung von Vulkasil S ein Aliquot von 9,25 %, entsprechend der in Beispiel 1 verwendeten Menge, Katalysator von 9,8 / 106 (eingesetzter Katalysator / Ausbeute an hergestelltem Katalysator) entnommen wurde.

Diese Lösung wurde im Vakuum eingedampft. Dazu wurde die gleiche Apparatur verwendet, die in Beispiel 1 zur Polymerisation benutzt wurde. Nachdem bei Raumtemperatur alles Lösungsmittel entfernt war, wurde das Vakuum, wie in Beispiel 1 beschrieben, mit trockenem Butadien aufgehoben. In dem rotierenden und gerührten Kolben bildete sich an der Wand eine schmierige Masse. Die Temperatur stieg innerhalb von 2 Minuten auf 59°C. Dabei verminderte sich der Druck von 1 000 auf 920 mbar. Es wurde erneut Butadien bis zu einem Druck von 1 000 mbar zugegeben. Die Butadienaufhahme war sehr langsam. Wenn der Druck auf 930 mbar abgefallen war, wurde jeweils Butadien bis zu einem Druck von 1 000 mbar gasförmig zugegeben. Nach einer Stunde hatte sich ein weicher Polymerklumpen gebildet. Es wurde kein weiteres Butadien aufgenommen.

Die Ausbeute betrug nur 11,3 g.

### Beispiel 2

Es wurde wie in Beispiel 1 verfahren, mit folgenden Unterschieden:
a) Vorbehandlung des Trägers:
zur Vorbehandlung des verwendeten Vulkasil S wurden nur 2 mMol DIBAH anstelle der in Beispiel 1 verwendeten 58 mMol, jeweils bezogen auf 100 g Vulkasil S, eingesetzt.
b) Herstellung des Katalysators:
Es wurden folgende Mengen eingesetzt:

| | |
|---|---|
| 120 ml | Hexan, |
| 100 mMol | DIBAH, |
| 5,0 mMol | EASC, |
| 1,25 g | Butadien, |
| 5,0 mMol | NDV und |
| 29,7 g | Vulkasil S, das vor der Zugabe der Katalysatorlösung in 200 ml Hexan aufgeschlämmt wurde. |

Nach dem Abdestillieren des Lösungsmittels im Vakuum wurden 32,9 g eines frei fließenden Pulvers isoliert.
c) Polymerisation:
Es wurden 6,4 g des Katalysators zur Gasphasenpolymerisation von Butadien eingesetzt. Die Polymerisation wurde wie in Beispiel 1 beschrieben durchgeführt. Es wurde nur so viel Butadien zugegeben, daß die Temperatur zwischen 20 und 70°C lag. Die Polymerisation wurde zweimal unterbrochen. Dazu wurde die Apparatur auf 1 Torr evakuiert und anschließend mit N₂ befüllt. Bei Wiederaufnahme der Polymerisation wurde evakuiert und mit Butadien befüllt. Nach 6 Stunden wurde die Rührung und Rotation abgestellt, weil eine Durchmischung nicht mehr erfolgte.
Nach einer gesamten Reaktionszeit von 18 Stunden hatten sich 431 g eines festen Polymeren gebildet, das folgende Eigenschaften aufwies:
Mooney-Viskosität: ML (1 + 4', 100°C) = 87 ME
   Gehalt an cis-1,4-Doppelbindungen: 95,9%

## Patentansprüche

1. Katalysator, bestehend aus
A) einem Alkoholat der Seltenen Erden (I),
einem Carboxylat der Seltenen Erden (II),
einer Komplexverbindung der Seltenen Erden mit Diketonen (III) und/oder
einer Additionsverbindung der Halogenide der Seltenen Erden mit einer Sauerstoff- oder Stickstoff-Donator-Verbindung (IV) folgender Formeln:
(RO)₃M (I),
(R-CO₂)₃M (II), 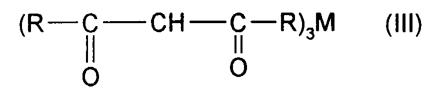
und
MX₃ · y Donator (IV),
B) einem Aluminiumtrialkyl, einem Dialkylaluminiumhydrid und/oder einem Alumoxan der Formeln (V) - (VIII):
Al R₃ (V),
HAl R₂ (VI), 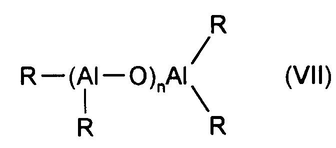
und 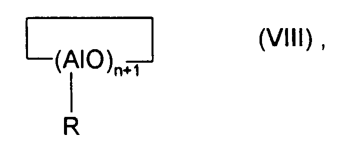 wobei in den Formeln
M ein dreiwertiges Element der Seltenen Erden mit den Ordnungszahlen 57 bis 71 bedeutet,
R gleich oder verschieden ist und Alkylreste mit 1 bis 10 Kohlenstoffatomen bedeutet,
X für Chlor, Brom oder Iod steht,
y 1 bis 6 bedeutet und
n 1 bis 50 bedeutet,
C) einer weiteren Lewissäure und
D) einem inerten, teilchenförmigen, anorganischen Feststoff mit einer spezifischen Oberfläche größer als 10 m²/g (BET) und einem Porenvolumen von 0,3 bis 15 ml/g.

2. Katalysator gemäß Anspruch 1, dadurch gekennzeichnet, daß das Molverhältnis der Komponente A zu Komponente B 1:1 bis 1:1 000 beträgt.

3. Katalysator gemäß Ansprüchen 1 und 2, dadurch gekennzeichnet, daß das Molverhältnis der Komponente A zu Komponente C 1:0,4 bis 1:15 beträgt.

4. Katalysator gemäß Ansprüchen 1 bis 3, dadurch gekennzeichnet, daß die Komponente E in Mengen von 1-1 000 mol, bezogen auf 1 mol der Komponente A, eingesetzt wird.

5. Katalysator gemäß Ansprüchen 1 bis 4, dadurch gekennzeichnet, daß die Komponente A in Mengen von 0,1 mMol bis 1 Mol, bezogen auf 100 g der Komponente D, eingesetzt wird.

6. Verfahren zur Herstellung eines Katalysators gemäß Ansprüchen 1 bis 5, dadurch gekennzeichnet, daß man die Komponenten A bis D des in Anspruch 1 beschriebenen Katalysators in einem inerten, organischen Lösungs- und/oder Verdünnungsmittel bei Temperaturen von -20 bis 80°C in beliebiger Reihenfolge mischt, und anschließend das eingesetzte Lösungs- und/oder Verdünnungsmittel in geeigneter Weise abtrennt.

7. Verfahren zur Polymerisation von konjugierten Dienen in der Gasphase, dadurch gekennzeichnet, daß man einen Katalysator gemäß Anspruch 1 zur Polymerisation einsetzt.

## Claims

1. Catalyst consisting of
A) a rare earth alkoxide (I),
a rare earth carboxylate (II),
a coordination compound of the rare earths with diketones (III) and/or
an addition compound of rare earth halides with an oxygen or or nitrogen donor compound of of the following formulae:
(RO)₃M (I),
(R-CO₂)₃M (II), 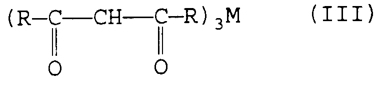
and
MX₃ · y donor (IV),
B) an aluminium trialkyl, a dialkylaluminium hydride and/or an alumoxane of the formulae (V)-(VIII):
AlR₃ (V),
HAlR₂ (VI), 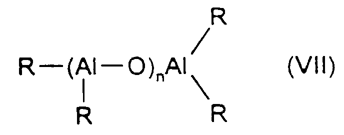
and 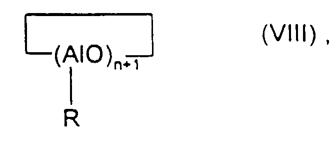 wherein in the formulae
M means a trivalent rare earth element of the atomic numbers from 57 to 71,
R is identical or different and means alkyl residues with 1 to 10 carbon atoms,
X denotes chlorine, bromine or iodine,
y means 1 to 6 and
n means 1 to 50,
C) a further Lewis acid and
D) an inert, particulate, inorganic solid with a specific surface area of greater than 10 m²/g (BET) and a pore volume of 0.3 to 15 ml/g.

2. Catalyst according to claim 1, characterised in that the molar ratio of component A to component B is 1:1 to 1:1000.

3. Catalyst according to claims 1 and 2, characterised in that the molar ratio of component A to component C is 1:0.4 to 1:15.

4. Catalyst according to claims 1 to 3, characterised in that component E is used in quantities of 1-1000 mol relative to 1 mol of component A.

5. Catalyst according to claims 1 to 4, characterised in that component A is used in quantities of 0.1 mmol to 1 mol relative to 100 g of component D.

6. Process for the production of a catalyst according to claims 1 to 5, characterised in that components A to D of the catalyst described in claim 1 are mixed in any desired sequence in an inert, organic solvent and/or diluent at temperatures of -20 to 80°C, and the solvent and/or diluent used is then suitably separated.

7. Process for the polymerisation of conjugated dienes in the gas phase, characterised in that a catalyst according to claim 1 is used for the polymerisation.

## Revendications

1. Catalyseur constitué de :
A) un alcoolate des terres rares (I),
un carboxylate des terres rares (II),
un complexe des terres rares avec des dicétones (III) et/ou
un composé d'addition des halogénures des terres rares avec un composé donneur d'oxygène ou d'azote (IV) des formules suivantes :
(RO)₃M (I),
(R-CO)₃M (II), 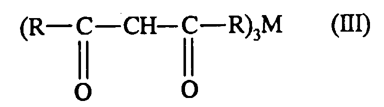
et
MX₃ · y donneur (IV),
B) un trialkylaluminium, un hydrure de dialkylaluminium et/ou un alumoxane des formules (V)-(VIII) :
Al R₃ (V),
HAl R₂ (VI), 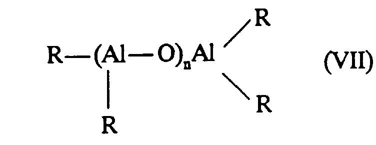
et 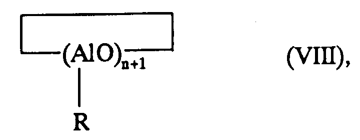 dans lesquelles formules
M est un élément trivalent des terres rares présentant une masse atomique de 57 à 71,
R représente des résidus alkyle identiques ou différents en C₁-C₁₀,
X représente le chlore, le brome ou l'iode
y est un nombre entier de 1 et 6 et
n est un nombre entier de 1 et 50,
C) un autre acide de Lewis et
D) une matière solide inorganique, particulaire, inerte, présentant une surface spécifique supérieure à 10 m²/g (BET) et un volume de pores de 0,3 à 15 ml/g.

2. Catalyseur selon la revendication 1, caractérisé en ce que le rapport molaire du constituant A au constituant B est compris entre 1:1 et 1:1 000.

3. Catalyseur selon les revendications 1 et 2, caractérisé en ce que le rapport molaire du constituant A au constituant C est compris entre 1:0,4 et 1:15.

4. Catalyseur selon les revendications 1 à 3, caractérisé en ce qu'on utilise le constituant E dans des quantités de 1-1 000 mol, rapportées à 1 mol du constituant A.

5. Catalyseur selon les revendications 1 à 4, caractérisé en ce qu'on utilise le constituant A dans des quantités de 0,1 mmol à 1 mol, rapportées à 100 g du constituant D.

6. Procédé pour la préparation d'un catalyseur selon les revendications 1 à 5, caractérisé en ce qu'on mélange les constituants A à D du catalyseur décrit dans la revendication 1 dans un solvant et/ou un diluant inerte, organique, à des températures de -20 à 80°C dans un ordre quelconque, et en ce qu'on sépare ensuite de manière appropriée le solvant et/ou le diluant utilisé.

7. Procédé pour la polymérisation en phase gazeuse de diènes conjugués, caractérisé en ce qu'on utilise pour la polymérisation un catalyseur selon la revendication 1.
